# EUROPEAN PATENT APPLICATION

(11) **EP 4 840 290 A1**
(43) Date of publication of application: **18.11.2026**
(21) Application number: 26178726.1
(22) Date of filing: 13.05.2026
(51) Int. Cl.: A01D 45/02

(54) **DECK PLATE ASSEMBLY IMPACT MONITORING AND CONTROL SYSTEM FOR AN AGRICULTURAL HARVESTER**

(30) Priority: 15.05.2025 US 202519209060
(71) Applicant: CNH Industrial Belgium N.V., 8210 Zedelgem (BE); CNH Industrial America LLC, New Holland, PA 17557 (US)
(72) Inventor: Linde, Karl, New Holland, 17557 (US); Martin, Jethro, New Holland, 17557 (US); Hunt, Cory, New Holland, 17557 (US); Missotten, Bart M.A., 8210 Zedelgem (BE); Jongmans, Dré W.J., 8210 Zedelgem (BE)
(74) Representative: CNH Industrial IP Department

(57) **Abstract**

A row unit (208) of an agricultural harvester (100) includes a deck plate assembly (228) having multiple deck plates. Each deck plate is configured to be independently mounted to a frame (240) of the row unit (208), and the deck plates are not directly rigidly coupled to one another. The row unit (208) also includes a deck plate assembly impact monitoring system (300) having at least one impact sensor (302) configured to output at least one signal indicative of impact of a corn ear on each of the deck plates. The deck plate assembly impact monitoring system (300) also includes a controller (304) communicatively coupled to the at least one impact sensor (302). The controller (304) includes a processor (306) and a memory (308), and the controller (304) is configured to identify which of the deck plates is impacted by the corn ear based on the at least one signal.

## Description

### BACKGROUND

The present disclosure relates generally to a deck plate assembly impact monitoring and control system for an agricultural harvester.

An agricultural harvester may be used to harvest agricultural crops, such as barley, beans, beets, carrots, corn, cotton, flax, oats, potatoes, rye, soybeans, wheat, or other plant crops. The agricultural harvester may include a header, which may be configured to efficiently harvest certain types of crops. For example, a corn header may be configured to efficiently harvest corn. The corn header may include row units that include components configured to separate ears of corn from stalks as the agricultural harvester travels through a field. Augers carry the ears of corn toward a processing system of the agricultural harvester, and the stalks are deposited on the field.

Each row unit is configured to separate the corn ear from the stalk, carry the corn ear toward a respective auger, and direct the stalk to the field. For example, each row unit may include a pair of feed rollers configured to grip the stalk and to rotate in opposite directions, thereby driving the stalk rearwardly and toward the field. Each row unit may also include a pair of deck plates positioned over the pair of feed rollers. The pair of deck plates are separated from one another along a lateral axis to define a gap. The spacing between the pair of deck plates may be manually controlled so the gap is sized to enable the stalk to pass through the gap and to block the corn ear from passing through the gap. During operation of the agricultural harvester, the corn ear may impact a rearward portion of the deck plates, thereby causing under-processing of the crop, in which an undesirable amount of material other than grain (MOG), such as the stalk and leaves, remains attached to the corn ear. The MOG attached to the corn ear is transported to the crop processing system, which causes the crop processing system to utilize additional energy to remove and process the MOG. Furthermore, during operation of the agricultural harvester, the corn ear may impact a forward portion of the deck plates, thereby causing over-processing of the crop, in which the corn ear moves along a substantial portion of the length of the deck plates. As the corn ear moves along the deck plates, corn kernels may be stripped off the corn ear, thereby reducing yield.

### BRIEF DESCRIPTION

In certain embodiments, a row unit of an agricultural harvester includes a deck plate assembly having multiple deck plates. Each deck plate is configured to be independently mounted to a frame of the row unit, and the deck plates are not directly rigidly coupled to one another. The row unit also includes a deck plate assembly impact monitoring system having at least one impact sensor configured to output at least one signal indicative of impact of a corn ear on each of the deck plates. The deck plate assembly impact monitoring system also includes a controller communicatively coupled to the at least one impact sensor. The controller includes a processor and a memory, and the controller is configured to identify which of the deck plates is impacted by the corn ear based on the at least one signal.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a corn header;
FIG. 2 is a perspective view of an embodiment of a corn header that may be employed within the agricultural harvester of FIG. 1;
FIG. 3 is a perspective view of a portion of the corn header of FIG. 2;
FIG. 4 is a perspective view of an embodiment of a deck plate assembly and a portion of an embodiment of a deck plate assembly impact monitoring and control system that may be employed within a row unit of the corn header of FIG. 2;
FIG. 5 is a cross-sectional view of a portion of another embodiment of a deck plate assembly and a portion of another embodiment of a deck plate assembly impact monitoring and control system that may be employed within a row unit of the corn header of FIG. 2;
FIG. 6 is a cross-sectional view of a portion of a further embodiment of a deck plate assembly and a portion of a further embodiment of a deck plate assembly impact monitoring and control system that may be employed within a row unit of the corn header of FIG. 2;
FIG. 7 is a perspective view of another embodiment of a deck plate assembly and a portion of another embodiment of a deck plate assembly impact monitoring and control system that may be employed within a row unit of the corn header of FIG. 2; and
FIG. 8 is a block diagram of an embodiment of a deck plate assembly impact monitoring and control system that may be employed within the agricultural harvester of FIG. 1.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

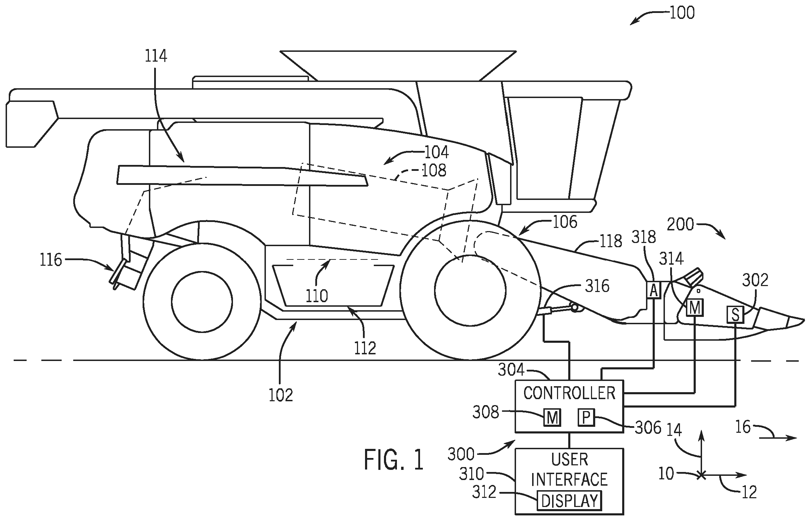

FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 of the agricultural crop processing system 104 for further processing of the ears of corn. The agricultural crop processing system 104 receives the ears of corn from the corn header 200 and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100.

The corn header 200 includes multiple row units configured to separate ears of corn from stalks, thereby leaving bare stalks engaged with the soil. The ears of corn are directed toward the inlet 106. As discussed in detail below, each row unit includes a pair of feed rollers configured to grip the stalk and to rotate in opposite directions, thereby driving the stalk rearwardly and toward the field. In addition, each row unit includes a pair of deck plate assemblies positioned over the pair of feed rollers. The pair of deck plate assemblies are separated from one another to define a gap. Furthermore, each row unit includes a pair of chains that are configured to drive or push the corn ear along the pair of deck plate assemblies. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

In the illustrated embodiment, the agricultural harvester 100 includes a deck plate assembly impact monitoring and control system 300 configured to monitor a location of an impact of a corn ear on a deck plate assembly of a row unit. As discussed in detail below, at least one deck plate assembly of at least one row unit includes multiple deck plates independently mounted to a frame of the row unit, in which the deck plates are not directly rigidly coupled to one another. The deck plate assembly impact monitoring and control system 300 includes at least one impact sensor 302 configured to output at least one signal indicative of impact of a corn ear on each deck plate of the deck plate assembly. In addition, the deck plate assembly impact monitoring and control system 300 includes a controller 304 configured to identify which deck plate of the deck plate assembly is impacted by the corn ear based on the signal(s) from the impact sensor(s) 302. In certain embodiments, the controller 304 is configured to output a signal to a user interface indicative of a location of the corn ear impact along the deck plate assembly (e.g., based on which deck plate is impacted by the corn ear). In response to receiving the signal from the controller, the user interface is configured to present an indication (e.g., a visual indication) of the location of the corn ear impact along the deck plate assembly. Based on the information provided by the user interface, the operator may control at least one actuator of the agricultural harvester 100 to adjust the location of the corn ear impact to a central zone along the deck plate assembly. Furthermore, in certain embodiments, the controller 304 is configured to control at least one actuator of the agricultural harvester 100 based on which deck plate of the deck plate assembly is impacted by the corn ear, thereby adjusting the location of the corn ear impact to the central zone along the deck plate assembly.

In the illustrated embodiment, the controller 304 of the deck plate assembly impact monitoring and control system 300 is communicatively coupled to the impact sensor(s) 302. In certain embodiments, the controller 304 is an electronic controller having electrical circuitry configured to identify which deck plate of the deck plate assembly is impacted by the corn ear. In the illustrated embodiment, the controller 304 includes a processor 306, such as a microprocessor, and a memory device 308. The controller 304 may also include one or more storage devices and/or other suitable components. The processor 306 may be used to execute software, such as software for identifying which deck plate of the deck plate assembly is impacted by the corn ear, and so forth. Moreover, the processor 306 may include multiple microprocessors, one or more "general-purpose" microprocessors, one or more special-purpose microprocessors, and/or one or more application specific integrated circuits (ASICs), or some combination thereof. For example, the processor 306 may include one or more reduced instruction set (RISC) processors.

The memory device 308 may include a volatile memory, such as random access memory (RAM), and/or a nonvolatile memory, such as read-only memory (ROM). The memory device 308 may store a variety of information and may be used for various purposes. For example, the memory device 308 may store processor-executable instructions (e.g., firmware or software) for the processor 306 to execute, such as instructions for identifying which deck plate of the deck plate assembly is impacted by the corn ear, and so forth. The storage device(s) (e.g., nonvolatile storage) may include ROM, flash memory, a hard drive, or any other suitable optical, magnetic, or solid-state storage medium, or a combination thereof. The storage device(s) may store data, instructions (e.g., software or firmware for identifying which deck plate of the deck plate assembly is impacted by the corn ear, etc.), and any other suitable data.

In the illustrated embodiment, the deck plate assembly impact monitoring and control system 300 includes a user interface 310 communicatively coupled to the controller 304. The user interface 310 is configured to receive input from an operator and to provide information to the operator. The user interface 310 may include any suitable input device(s) for receiving input, such as a keyboard, a mouse, button(s), switch(es), knob(s), other suitable input device(s), or a combination thereof. In addition, the user interface 310 may include any suitable output device(s) for presenting information to the operator, such as speaker(s), indicator light(s), other suitable output device(s), or a combination thereof. In the illustrated embodiment, the user interface 310 includes a display 312 configured to present visual information to the operator. In certain embodiments, the display 312 may include a touchscreen interface configured to receive input from the operator. While the deck plate assembly impact monitoring and control system 300 includes the user interface 310 in the illustrated embodiment, in other embodiments, the user interface may be omitted.

In certain embodiments, in response to identifying which of the deck plates (e.g., which deck plate) is impacted by the corn ear, the controller 304 is configured to control the user interface 310 to present an indication of the deck plate impacted by the corn ear. For example, in certain embodiments, the display 312 of the user interface 310 is configured to present a visual indication of zones corresponding to the locations of the deck plates of the deck plate assembly (e.g., a forward zone at a forward deck plate, a central zone at a central deck plate, a rearward zone at a rearward deck plate). In such embodiments, in response to identifying which of the deck plates (e.g., which deck plate) is impacted by the corn ear, the controller 304 may control the user interface 310 to cause the display 312 to present a visual indication of the corn ear impact zone (e.g., by changing the color of the zone, etc.). Impact of the corn ear within the rearward zone (e.g., on the rearward deck plate) may cause under-processing of the crop, in which an undesirable amount of material other than grain (MOG), such as the stalk and leaves, remains attached to the corn ear. The MOG attached to the corn ear is transported to the crop processing system 104, which causes the crop processing system 104 to utilize additional energy to remove and process the MOG. Furthermore, impact of the corn ear within the forward zone (e.g., on the forward deck plate) may cause over-processing of the crop, in which the corn ear moves along a substantial portion of the length of the deck plate assembly. As the corn ear moves along the deck plate assembly, corn kernels may be stripped off the corn ear, thereby reducing yield. Accordingly, based on information provided by the user interface 310, the operator may adjust operation of the agricultural harvester to cause the corn ear to impact within the central zone (e.g., on the central deck plate), thereby reducing the energy usage of the crop processing system 104 and corn kernel loss at the row units.

In the illustrated embodiment, the deck plate assembly impact monitoring and control system 300 includes a feed roller drive motor 314 (e.g., actuator) communicatively coupled to the controller 304. The feed roller drive motor 314 is configured to drive at least one feed roller of at least one row unit to rotate. The controller 304 is configured to control the feed roller drive motor 314 to control the rotation rate of the feed roller(s) of the row unit(s). In certain embodiments, the controller 304 may control the feed roller drive motor 314 based on which of the deck plates (e.g., which deck plate) is impacted by the corn ear. For example, in response to identifying the corn ear impact on the rearward deck plate (e.g., within the rearward zone), the controller 304 may control the feed roller drive motor 314 to increase the rotation speed of the feed rollers, thereby moving the corn ear impact to the central deck plate (e.g., within the central zone). Furthermore, in response to identifying the corn ear impact on the forward deck plate (e.g., within the forward zone), the controller 304 may control the feed roller drive motor 314 to reduce the rotation speed of the feed rollers, thereby moving the corn ear impact to the central deck plate (e.g., within the central zone).

In the illustrated embodiment, the deck plate assembly impact monitoring and control system 300 includes a feeder house actuator 316 coupled to the chassis 102 of the agricultural harvester 100 and to a feeder house 118. The feeder house 118 is coupled to the chassis 102 of the agricultural harvester 100 and to the corn header 200. The feeder house actuator 316 is configured to drive the feeder house 118 to rotate relative to the chassis 102, thereby driving the corn header 200 to move vertically (e.g., with respect to the vertical axis 14) relative to the field. In the illustrated embodiment, the feeder house actuator 316 is communicatively coupled to the controller 304, and the controller 304 is configured to control the feeder house actuator 316 to drive the corn header 200 (e.g., the row units of the corn header 200) to move vertically. In certain embodiments, the controller 304 may control the feeder house actuator 316 based on which of the deck plates (e.g., which deck plate) is impacted by the corn ear. For example, in response to identifying the corn ear impact on the rearward deck plate (e.g., within the rearward zone), the controller 304 may control the feeder house actuator 316 to increase the height of the corn header 200 relative to the ground, thereby moving the corn ear impact to the central deck plate (e.g., within the central zone). Furthermore, in response to identifying the corn ear impact on the forward deck plate (e.g., within the forward zone), the controller 304 may control the feeder house actuator 316 to reduce the height of the corn header 200 relative to the ground, thereby moving the corn ear impact to the central deck plate (e.g., within the central zone).

In the illustrated embodiment, the deck plate assembly impact monitoring and control system 300 includes a header angle actuator 318 communicatively coupled to the controller 304. The header angle actuator 318 is configured to rotate the corn header 200 (e.g., the row units of the corn header) about the lateral axis 10 of the corn header 200. In certain embodiments, the controller 304 may control the header angle actuator 318 based on which of the deck plates (e.g., which deck plate) is impacted by the corn ear. For example, in response to identifying the corn ear impact on the rearward deck plate (e.g., within the rearward zone), the controller 304 may control the header angle actuator 318 to rotate the corn header 200 upwardly (e.g., such that the forward end of the corn header 200 moves upwardly), thereby moving the corn ear impact to the central deck plate (e.g., within the central zone). Furthermore, in response to identifying the corn ear impact on the forward deck plate (e.g., within the forward zone), the controller 304 may control the header angle actuator 318 to rotate the corn header 200 downwardly (e.g., such that the forward end of the corn header 200 moves downwardly), thereby moving the corn ear impact to the central deck plate (e.g., within the central zone).

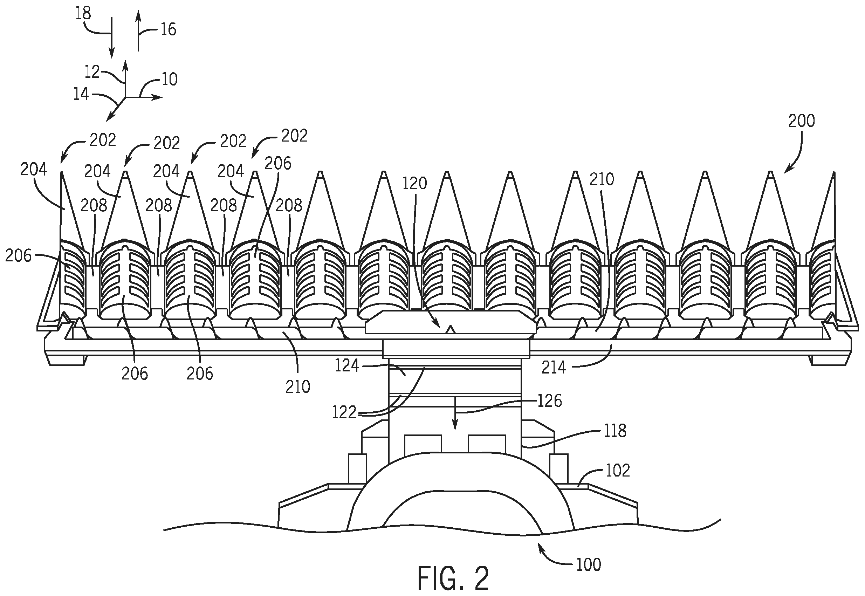

FIG. 2 is a perspective view of an embodiment of a corn header 200 that may be employed within the agricultural harvester 100 of FIG. 1. In the illustrated embodiment, the corn header 200 includes multiple crop engagement assemblies 202 distributed along the lateral axis 10 of the corn header 200. Each crop engagement assembly 202 includes a divider 204 and a hood 206. The dividers 204 are configured to divide rows of a crop (e.g., corn), and the hoods 206 are configured to block crop material from entering internal components of the corn header 200. The crop engagement assemblies 202 may be evenly spaced along the lateral axis 10 of the corn header 200. While the corn header 200 is in the working position and moving along the direction of travel 16, the dividers 204 direct crop material from each row into a respective row unit 208. In addition, the hoods 206 facilitate alignment of the crop material with the row units 208. Accordingly, the hoods 206 direct the crop material through the row units 208.

The row units 208 are configured to separate ears of corn from stalks, thereby leaving bare stalks engaged with the soil (e.g., stubble). The ears of corn may be directed to one of a pair of augers 210 configured to convey the ears of corn inwardly along the lateral axis 10 of the corn header 200 to a feeder 120 at the lateral center of the corn header 200. As illustrated, the augers 210 extend along a substantial portion of the width of the corn header 200 (e.g., along the lateral axis 10 of the corn header 200). The augers 210 may be driven by a driving mechanism (e.g., electric motor, hydraulic motor, etc.). As the agricultural harvester 100 moves through the field, the dividers 204 direct the rows of crops/crop material into the row units 208. The row units 208 engage the crop material within the field and separate the ears of corn from the stalks, and the augers 210 transport the ears of corn to the feeder 120, which directs the ears of corn toward the inlet of the agricultural crop processing system. Each row unit 208 includes a pair of feed rollers which pull the stalk of each crop downwardly through the row unit during harvesting. As the stalks of the crops are pulled through the feed rollers, the ears are separated from the stalks and are conveyed toward the augers 210.

In addition to pulling the stalks of the crops downwardly, the pairs of feed rollers drive the stalks rearwardly (e.g., along a rearward direction 18 opposite the direction of travel 16) relative to a frame 214 of the corn header 200. Due to the movement of the agricultural harvester 100, the frame 214 of the corn header 200 is driven to move forwardly along the direction of travel 16. The difference between the forward speed of the corn header frame 214 relative to the field and the rearward speed of the stalks relative to the corn header frame 214 may be referred to as the conveyance speed. A conveyance speed of about zero may enhance the efficiency of the harvesting operation (e.g., by reducing the loads/forces applied to the ears of corn) and/or may enhance subsequent agricultural operation(s) (e.g., by enhancing the engagement of the bare stalks with the soil).

The feeder 120 is disposed within the feeder house 118, and the feeder 120 is configured to move the ears of corn from the corn header 200 toward the inlet of the agricultural crop processing system. In the illustrated embodiment, the feeder 120 includes multiple bars 122 coupled to one or more chains or belts. The chain(s) or belt(s) may be driven to rotate, thereby moving the bars 122 along the feeder floor 124 in a direction 126 toward the inlet of the agricultural crop processing system.

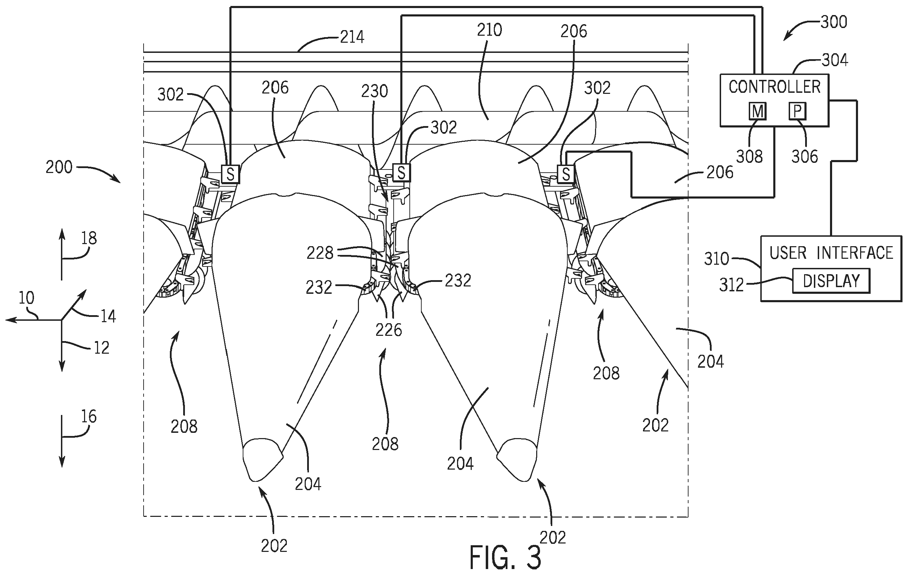

FIG. 3 is a perspective view of a portion of the corn header 200 of FIG. 2. As previously discussed, the corn header 200 includes multiple dividers 204 that direct the crops into the row units 208. Each row unit 208 is configured to separate the corn ear from the stalk, carry the corn ear toward the respective auger 210, and direct the stalk to the field. As illustrated, each row unit 208 includes a pair of feed rollers 226 configured to grip the stalk and to rotate in opposite directions, thereby driving the stalk rearwardly (e.g., along the rearward direction 18) and toward the field (e.g., vertically downward, below the corn header 200). Each row unit 208 also includes a pair of deck plate assemblies 228 positioned over the pair of feed rollers 226. Each deck plate assembly 228 extends along the longitudinal axis 12 of the corn header 200, and the pair of deck plate assemblies 228 are separated from one another along the lateral axis 10 of the corn header 200 to define a gap 230. Furthermore, each row unit 208 includes a pair of chains 232 (e.g., with lugs) that are configured to drive or push the corn ear along the pair of deck plate assemblies 228 toward the respective auger 210. Each hood 206 is positioned rearward of each divider 204 and between adjacent row units 208 to cover various components. While each row unit includes a pair of feed rollers 226 and a pair of chains 232 in the illustrated embodiment, in other embodiments, at least one row unit may include other/additional suitable component(s) configured to facilitate separating the ear of corn from the stalk, directing the ear of corn to the respective auger, and directing the stalk toward the surface of the agricultural field.

At least one deck plate assembly 228 (e.g., at least one deck plate assembly of each pair of deck plate assemblies 228) includes multiple deck plates (e.g., 2, 3, 4, 5, 6, or more). For example, in certain embodiments, one deck plate assembly 228 of each pair may include multiple deck plates, and the other deck plate assembly 228 of each pair may include a single deck plate. Furthermore, in certain embodiments, a single deck plate assembly 228 of the corn header 200 may include multiple deck plates. With regard to deck plate assemblies having multiple deck plates, each deck plate of the deck plate assembly 228 is independently mounted to a frame of the respective row unit 208, and the deck plates are not directly rigidly coupled to one another. In certain embodiments, at least two of the deck plates may be spaced apart from one another, and/or at least two of the deck plates may be coupled to one another by a flexible connection. For example, all of the deck plates of the deck plate assembly 228 may be spaced apart from one another, or all of the deck plates of the deck plate assembly 228 may be coupled to one another by respective flexible connection(s).

As previously discussed, the deck plate assembly impact monitoring and control system 300 includes at least one impact sensor 302 configured to output at least one signal indicative of impact of a corn ear on each of the deck plates of at least one multi-deck plate deck plate assembly 228. For example, in certain embodiments, each respective multi-deck plate deck plate assembly 228 may be monitored by at least one respective impact sensor 302. In certain embodiments, one impact sensor 302 may monitor all of the deck plates of a deck plate assembly 228, or each deck plate of the deck plate assembly 228 may be monitored by a respective impact sensor 302. Each impact sensor 302 may include any suitable type(s) of sensing device(s), such as an accelerometer, a knock sensor, an optical sensor, an electrical contact sensor, a pressure transducer, other suitable type(s) of sensing device(s), or a combination thereof.

As illustrated, each impact sensor 302 is communicatively coupled to the controller 304. In addition, the controller 304, with regard to each multi-deck plate deck plate assembly 228, is configured to identify which of the deck plates (e.g., which deck plate) of the deck plate assembly 228 is impacted by the corn ear based on the signal(s) from the impact sensor(s) 302. In certain embodiments, in response to identifying which of the deck plates (e.g., which deck plate) is impacted by the corn ear, the controller 304 is configured to control the user interface 310 to present an indication of the deck plate impacted by the corn ear. For example, in certain embodiments, the display 312 of the user interface 310 is configured to present a visual indication of zones corresponding to the locations of the deck plates of at least one multi-deck plate deck plate assembly (e.g., a forward zone at a forward deck plate, a central zone at a central deck plate, a rearward zone at a rearward deck plate). In such embodiments, in response to identifying which of the deck plates (e.g., which deck plate) is impacted by the corn ear, the controller 304 may control the user interface 310 to cause the display 312 to provide a visual indication of the corn ear impact zone (e.g., by changing the color of the zone, etc.). Furthermore, in certain embodiments, the controller 304 is configured to control the feed roller drive motor, the feeder house actuator, the header angle actuator, or a combination thereof, based on which of the deck plates (e.g., which deck plate) is impacted by the corn ear.

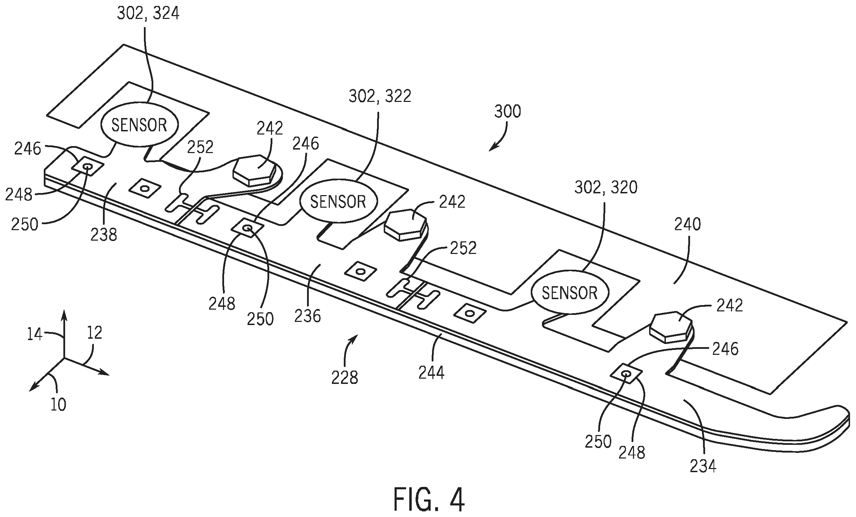

FIG. 4 is a perspective view of an embodiment of a deck plate assembly 228 and a portion of an embodiment of a deck plate assembly impact monitoring and control system 300 that may be employed within a row unit of the corn header of FIG. 2. As illustrated, the deck plate assembly 228 includes multiple deck plates that are not directly rigidly coupled to one another. In the illustrated embodiment, the deck plate assembly 228 includes a forward deck plate 234, a central deck plate 236, and a rearward deck plate 238. As illustrated, the deck plates of the deck plate assembly 228 are distributed along the longitudinal axis 12 of the corn header (e.g., as compared to the deck plate assemblies of the pair, which are spaced apart from one another with respect to the lateral axis 10). While the deck plate assembly 228 includes three deck plates in the illustrated embodiment, in other embodiments, the deck plate assembly may include more or fewer deck plates (e.g., 2, 4, 5, 6, or more). Each deck plate is formed from a rigid material, such as metal (e.g., steel, aluminum, etc.), a composite material (e.g., fiberglass, carbon fiber, etc.), or a rigid polymeric material.

Each deck plate of the deck plate assembly 228 is independently mounted to a frame 240 of the row unit. The frame 240 of the row unit is configured to support multiple components of the row unit, such as the deck plate assemblies and the feed rollers. In certain embodiments, the frame 240 of the row unit may be rigidly coupled to or integrally formed with the frame of the corn header. In the illustrated embodiment, each deck plate of the deck plate assembly 228 is coupled to the row unit frame 240 by a respective fastener connection, and each fastener connection includes a single fastener 242. While each fastener connection includes a single fastener 242 in the illustrated embodiment, in other embodiments, at least one fastener connection (e.g., each fastener connection) may include multiple fasteners. Furthermore, in certain embodiments, at least one deck plate (e.g., each deck plate) may be coupled to the frame by other suitable connection(s) (e.g., alone or in combination with the fastener connection), such as an adhesive connection, a welded connection, a press-fit connection, other suitable type(s) of connection(s), or a combination thereof. In certain embodiments, the connection between each deck plate and the row unit frame may include a dynamic isolator configured to enable the deck plate to move (e.g., vibrate) with respect to the row unit frame. For example, the dynamic isolator may include an O-ring, a vibration damping washer, a spring, other suitable type(s) of dynamic isolator(s), or a combination thereof. In certain embodiments, at least one deck plate may be integrally formed with the frame (e.g., coupled to the frame by an integral connection). In such embodiments, the integral connection between the deck plate and the row unit frame enables the deck plate to move (e.g., deflect, vibrate) relative to the frame. Furthermore, as discussed in detail below, at least one deck plate of the deck plate assembly (e.g., each deck plate) may be movably coupled to the row unit frame (e.g., by a pivot joint, etc.).

In the illustrated embodiment, the deck plates of the deck plate assembly 228 are coupled to one another by respective flexible connections. The flexible connections enable the deck plates to move (e.g., deflect, vibrate) relative to one another. In the illustrated embodiment, the flexible connections are formed by a resilient base 244 coupled to the deck plates of the deck plate assembly 228. The resilient base 244 may be formed by any suitable material(s), such as rubber, a resilient polymeric material, etc. In the illustrated embodiment, the resilient base 244 extends along a bottom surface of each deck plate, and protrusions 246 of the resilient base 244 extend through apertures 248 in the deck plates. Furthermore, the resilient base 244 includes a rigid dowel 250 extending through each protrusion 246, thereby stiffening the protrusion 246. The rigid dowels 250 may be formed from any suitable material(s), such as metal (e.g., aluminum, steel, etc.), a composite material (e.g., fiberglass, carbon fiber, etc.), a rigid polymeric material, other suitable material(s), or a combination thereof. In addition, the resilient base 244 includes flexible connectors 252 configured to establish the flexible connections between the deck plates. As illustrated, the resilient base 244 includes a first flexible connector 252 coupled to the forward deck plate 234 and the central deck plate 236, and the resilient base 244 includes a second flexible connector 252 coupled to the central deck plate 236 and to the rearward deck plate 238. In certain embodiments, the deck plates are coupled to the resilient base 244 by press-fit connections (e.g., at the protrusions 246 and/or at the flexible connections). Furthermore, in certain embodiments, the resilient base 244 may be molded to the deck plates, thereby establishing a mechanical bond between the deck plates and the resilient base 244. In addition, in certain embodiments, the deck plates may be coupled to the resilient base 244 by adhesive connections.

While a rigid dowel 250 extends through each protrusion 246 in the illustrated embodiment, in certain embodiments, at least one rigid dowel (e.g., each rigid dowel) may be omitted. Furthermore, while the resilient base 244 includes two protrusions 246 for each deck plate in the illustrated embodiment, in other embodiments, the resilient base 244 may include more or fewer protrusions for each deck plate (e.g., 1, 3, 4, or more). Furthermore, in certain embodiments, the protrusions may be omitted. While the flexible connections are formed by the resilient base 244 in the illustrated embodiment, in other embodiments, the flexible connections may be formed by any other suitable structure(s), such as a resilient element coupled to each pair of adjacent deck plates, etc. In addition, while the deck plates of the deck plate assembly 228 are coupled to one another by respective flexible connections in the illustrated embodiment, in other embodiments, the deck plates may be spaced apart from one another. Furthermore, in certain embodiments, at least two deck plates may be spaced apart from one another, and at least two deck plates may be coupled to one another by a flexible connection.

In the illustrated embodiment, the deck plate assembly impact monitoring and control system 300 includes three impact sensors 302 for the three deck plates. As illustrated, a first impact sensor 320 is coupled to the forward deck plate 234, a second impact sensor 322 is coupled to the central deck plate 236, and a third impact sensor 324 is coupled to the rearward deck plate 238. Each impact sensor 302 is configured to output a respective signal indicative of impact of a corn ear on a respective deck plate. Furthermore, the controller of the deck plate assembly impact monitoring and control system is configured to identify which of the deck plates (e.g., which deck plate) is impacted by the corn ear based on the signals. Each sensor 302 may include any suitable type(s) of impact sensing device(s), such as an accelerometer, a knock sensor, an optical sensor, other suitable type(s) of sensing device(s), or a combination thereof.

By way of example, in response to a corn ear impacting the forward deck plate 234, the first impact sensor 320 may detect the dynamic response of the forward deck plate 234 and output a signal indicative of the impact, and the controller may determine the corn ear impacted the forward deck plate 234 based on the signal. Furthermore, in response to a corn ear impacting the central deck plate 236, the second impact sensor 322 may detect the dynamic response of the central deck plate 236 and output a signal indicative of the impact, and the controller may determine the corn ear impacted the central deck plate 236 based on the signal. In addition, in response to a corn ear impacting the rearward deck plate 238, the third impact sensor 324 may detect the dynamic response of the rearward deck plate 238 and output a signal indicative of the impact, and the controller may determine the corn ear impacted the rearward deck plate 238 based on the signal. In certain embodiments, in response to determining which deck plate is impacted by the corn ear, the controller may control the user interface to present an indication of the location of the corn ear impact on the deck plate assembly 228 (e.g., a forward zone at the forward deck plate, a central zone at the central deck plate, a rearward zone at the rearward deck plate). Furthermore, the controller may control at least one actuator based on which of the deck plates (e.g., which deck plate) is impacted by the corn ear.

Impact between the corn ear and the forward deck plate 234 may cause over-processing of the crop, in which the corn ear moves along a substantial portion of the length (e.g., longitudinal extent) of the deck plate assembly. As the corn ear moves along the deck plate assembly (e.g., with respect to the longitudinal axis 12), corn kernels may be stripped off the corn ear, thereby reducing yield. Furthermore, impact between the corn ear and the rearward deck plate 238 may cause under-processing of the crop, in which an undesirable amount of material other than grain (MOG), such as the stalk and leaves, remains attached to the corn ear. The MOG attached to the corn ear may be transported to the crop processing system, which causes the crop processing system to utilize additional energy to remove and process the MOG. Accordingly, in response to identifying a corn ear impact with the forward deck plate 234 or the rearward deck plate 238, the operator (e.g., based on information provided by the user interface) or the controller may control at least one actuator of the agricultural harvester to adjust operation of the agricultural harvester to move the location of corn ear impact to the central deck plate 236. For example, in certain embodiments, in response to identifying a corn ear impact with the forward deck plate 234, the controller may control the feed roller drive motor to reduce the rotation rate of the feed rollers, the feeder house actuator to drive the corn header to move downwardly, the header angle actuator to drive the corn header to rotate downwardly, or a combination thereof. Furthermore, in certain embodiments, in response to identifying a corn ear impact with the rearward deck plate 238, the controller may control the feed roller drive motor to increase the rotation rate of the feed rollers, the feeder house actuator to drive the corn header to move upwardly, the header angle actuator to drive the corn header to rotate upwardly, or a combination thereof.

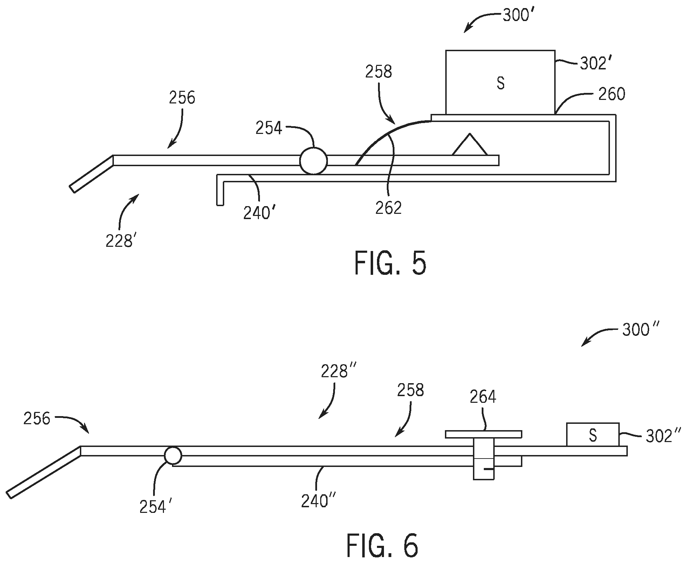

FIG. 5 is a cross-sectional view of a portion of another embodiment of a deck plate assembly 228' and a portion of another embodiment of a deck plate assembly impact monitoring and control system 300' that may be employed within a row unit of the corn header of FIG. 2. The deck plates of the deck plate assembly 228' are distributed along the longitudinal axis of the corn header, as disclosed above with reference to FIG. 4. In the illustrated embodiment, each deck plate of the deck plate assembly 228' is pivotally coupled to the frame 240' of the row unit by a respective pivot joint 254. The pivot joint 254 enables the deck plate to rotate about an axis that extends along a longitudinal extent of the deck plate assembly (e.g., along the longitudinal axis of the corn header). Accordingly, in response to a corn ear impact on an inner lateral portion 256 of the deck plate, an outer lateral portion 258 may pivot upwardly. In the illustrated embodiment, the frame 240' includes an extension 260, and the outer lateral portion 258 may impact the extension 260 in response to the corn ear impacting the inner lateral portion 256. In the illustrated embodiment, a spring 262 is configured to urge the outer lateral portion 258 of each deck plate away from the extension 260 of the row unit frame 240', thereby substantially reducing or eliminating the possibility of contact between the outer lateral portion 258 of the deck plate and the extension 260 while a corn ear is not impacting the inner lateral portion 256 of the deck plate. The spring 262 may include any suitable type(s) of spring(s), such as leaf spring(s), coil spring(s), hydraulic cylinder(s), pneumatic cylinder(s), other suitable type(s) of spring(s), or a combination thereof. Furthermore, while each deck plate is urged away from the extension by a respective spring 262 in the illustrated embodiment, in certain embodiments, at least one deck plate may not be urged away from the extension by a respective spring.

Each impact sensor 302' is configured to monitor the impact between the outer lateral portion 258 of the respective deck plate and the extension 260 of the row unit frame 240', or the impact between the outer lateral portion 258 of the respective deck plate and the impact sensor 302'. For example, each impact sensor 302' may be positioned on the extension to engage the respective deck plate in response to the impact of the corn ear on the respective deck plate. In certain embodiments, each impact sensor 302' may include an electrical contact sensor configured to detect an electrical connection between a conductor at the outer lateral portion 258 of the respective deck plate and a conductor of the electrical contact sensor. Furthermore, in certain embodiments, each impact sensor 302' may include an accelerometer, a knock sensor, a pressure transducer, other suitable type(s) of sensing device(s), or a combination thereof, mounted on the extension 260 (e.g., on the opposite side of the extension from the respective deck plate or on the same side of the extension as the respective deck plate) or the outer lateral portion 258 of the respective deck plate. As previously discussed, each impact sensor 302' is configured to output a respective signal indicative of the impact of the corn ear on the respective deck plate, and the controller is configured to identify which deck plate is impacted by the corn ear based on the signals from the impact sensors 302'.

FIG. 6 is a cross-sectional view of a portion of a further embodiment of a deck plate assembly 228" and a portion of a further embodiment of a deck plate assembly impact monitoring and control system 300" that may be employed within a row unit of the corn header of FIG. 2. The deck plates of the deck plate assembly 228" are distributed along the longitudinal axis of the corn header, as disclosed above with reference to FIG. 4. In the illustrated embodiment, each deck plate of the deck plate assembly 228" is pivotally coupled to the frame 240" of the row unit by a respective pivot joint 254'. The pivot joint 254' enables the deck plate to rotate about an axis that extends along a longitudinal extent of the deck plate assembly (e.g., along the longitudinal axis of the corn header). Accordingly, in response to a corn ear impact on the inner lateral portion 256 of the deck plate, the outer lateral portion 258 may pivot upwardly. In the illustrated embodiment, the frame 240" includes a stop 264 for each deck plate, and the outer lateral portion 258 of each deck plate may impact the stop 264 in response to the corn ear impacting the inner lateral portion 256. Accordingly, the stop 264 is configured to block rotation of the deck plate in response to the impact of the corn ear on the deck plate. In certain embodiments, a spring may be configured to urge the outer lateral portion 258 of each deck plate away from the respective stop 264. In such embodiments, the spring may include any suitable type(s) of spring(s), such as leaf spring(s), coil spring(s), hydraulic cylinder(s), pneumatic cylinder(s), other suitable type(s) of spring(s), or a combination thereof. Furthermore, in certain embodiments, at least one deck plate may not be urged away from the respective stop by a respective spring.

Each impact sensor 302" is configured to monitor the impact between the outer lateral portion 258 of the respective deck plate and the respective stop 264. In certain embodiments, the impact sensor 302" includes an accelerometer, a knock sensor, a pressure transducer, other suitable type(s) of sensing device(s), or a combination thereof. In the illustrated embodiment, each impact sensor 302" is mounted to the respective deck plate (e.g., the outer lateral portion 258 of the respective deck plate). However, in other embodiments, each impact sensor 302" may be mounted to the respective stop 264. As previously discussed, each impact sensor 302" is configured to output a respective signal indicative of the impact of the corn ear on the respective deck plate, and the controller is configured to identify which deck plate is impacted by the corn ear based on the signals from the impact sensors 302".

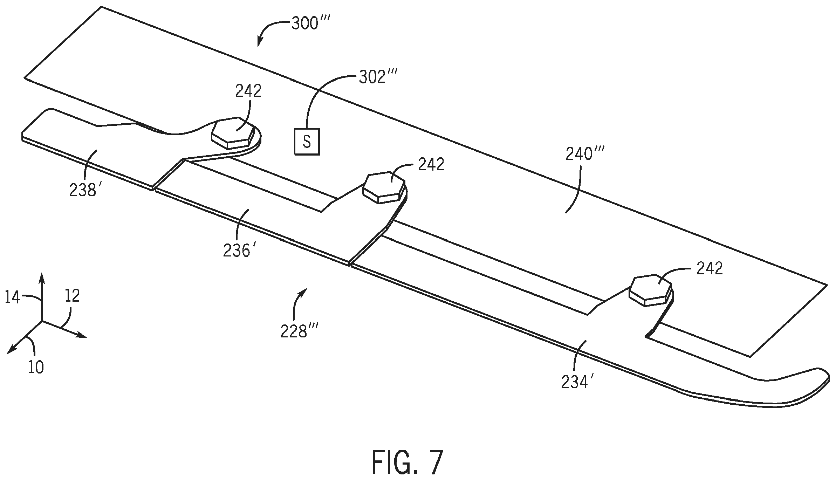

FIG. 7 is a perspective view of another embodiment of a deck plate assembly 228‴ and a portion of another embodiment of a deck plate assembly impact monitoring and control system 300‴ that may be employed within a row unit of the corn header of FIG. 2. In the illustrated embodiment, the deck plate assembly 228‴ includes the forward deck plate 234', the central deck plate 236', and the rearward deck plate 238'. As illustrated, the deck plates of the deck plate assembly 228‴ are distributed along the longitudinal axis 12 of the corn header (e.g., as compared to the deck plate assemblies of the pair, which are spaced apart from one another with respect to the lateral axis 10). While the deck plate assembly 228‴ includes three deck plates in the illustrated embodiment, in other embodiments, the deck plate assembly may include more or fewer deck plates (e.g., 2, 4, 5, 6, or more). Furthermore, in the illustrated embodiment, each deck plate of the deck plate assembly 228‴ is rigidly coupled to the row unit frame 240‴ by a respective fastener connection, and each fastener connection includes a single fastener 242. While each fastener connection includes a single fastener 242 in the illustrated embodiment, in other embodiments, at least one fastener connection (e.g., each fastener connection) may include multiple fasteners. Furthermore, in certain embodiments, at least one deck plate (e.g., each deck plate) may be rigidly coupled to the frame by other suitable connection(s) (e.g., alone or in combination with the fastener connection), such as an adhesive connection, a welded connection, a press-fit connection, other suitable type(s) of connection(s), or a combination thereof. In certain embodiments, the connection between each deck plate and the row unit frame may include a dynamic isolator configured to enable the deck plate to move (e.g., vibrate) with respect to the row unit frame. For example, the dynamic isolator may include an O-ring, a vibration damping washer, a spring, other suitable type(s) of dynamic isolator(s), or a combination thereof. In addition, in certain embodiments, at least one deck plate may be integrally formed with the frame (e.g., coupled to the frame by an integral connection). In such embodiments, the integral connection between the deck plate and the row unit frame enables the deck plate to move (e.g., vibrate) relative to the frame.

In the illustrated embodiment, the deck plates are spaced apart from one another, and each deck plate has a different acoustic characteristic. The acoustic characteristic may include resonance frequency, modal frequencies, etc. The different acoustic characteristics of the deck plates may be established by varying the dimensions of the deck plates (e.g., thickness, width, length, shape, etc.) and/or the material properties of the deck plates (e.g., stiffness, elasticity, etc.). Due to the different acoustic characteristics of the deck plates, each deck plate may have a different acoustic frequency response (e.g., sound) in response to impact of the corn ear on the deck plate. In the illustrated embodiment, the impact sensor 302‴ includes an acoustic sensor configured to output a signal indicative of the acoustic frequency response to the impact of the corn ear on each deck plate, which is indicative of the impact of the corn ear on the deck plate. In certain embodiments, the acoustic sensor includes a microphone configured to monitor sound emitted by each deck plate in response to the impact of the corn ear on the deck plate. Furthermore, in certain embodiments, the acoustic sensor includes another suitable acoustic sensing device configured to monitor the amplitude and the frequency of the vibration of each deck plate in response to the impact of the corn ear on the deck plate. For example, the acoustic sensing device may include a strain gauge (e.g., coupled to the frame), a piezoelectric sensor (e.g., coupled to the frame), a laser microphone (e.g., directed to each of the deck plates), etc.

The controller is configured to identify which of the deck plates (e.g., which deck plate) is impacted by the corn ear based on the monitored acoustic frequency response. For example, in response to the corn ear impacting the forward deck plate 234', the forward deck plate may produce an acoustic frequency response, which is monitored by the impact sensor 302"', thereby enabling the controller to identify the impact between the corn ear and the forward deck plate 234'. In addition, in response to the corn ear impacting the rearward deck plate 238', the rearward deck plate may produce an acoustic frequency response, different from the acoustic frequency response produced by the forward deck plate 234', which is monitored by the impact sensor 302‴, thereby enabling the controller to identify the impact between the corn ear and the rearward deck plate 236'. For example, in certain embodiments, the acoustic frequency response for each deck plate in response to a corn ear impact may be stored within the memory of the controller, thereby enabling the controller to identify which deck plate is impacted by the corn ear based on the monitored acoustic frequency response. While the deck plate assembly impact monitoring and control system 300‴ includes a single impact sensor 302‴ (e.g., acoustic sensor) in the illustrated embodiment, in other embodiments, the deck plate assembly impact monitoring and control system may include multiple impact sensors (e.g., acoustic sensors), such as one for each deck plate.

In certain embodiments, the corn header may include a single multi-deck plate deck plate assembly, and the deck plate assembly impact monitoring and control system may include sensor(s) for the single multi-deck plate deck plate assembly. In such embodiments, the multi-deck plate deck plate assembly and the deck plate assembly impact monitoring and control system may include any of the configurations disclosed above with reference to FIGS. 4-7. Furthermore, in certain embodiments, the corn header may include multiple multi-deck plate deck plate assemblies (e.g., one for each row unit, etc.), and the deck plate assembly impact monitoring and control system may include sensor(s) for each multi-deck plate deck plate assembly. In such embodiments, the multi-deck plate deck plate assemblies and the deck plate assembly impact monitoring and control system may include one or more of the configurations disclosed above with reference to FIGS. 4-7. For example, the configuration of the multi-deck plate deck plate assemblies may be the same, and the configuration of the impact sensors for the multi-deck plate deck plate assemblies may be the same. Alternatively, the configuration of at least two multi-deck plate deck plate assemblies may be different, and the configuration of the impact sensors for the at least two multi-deck plate deck plate assemblies may be different.

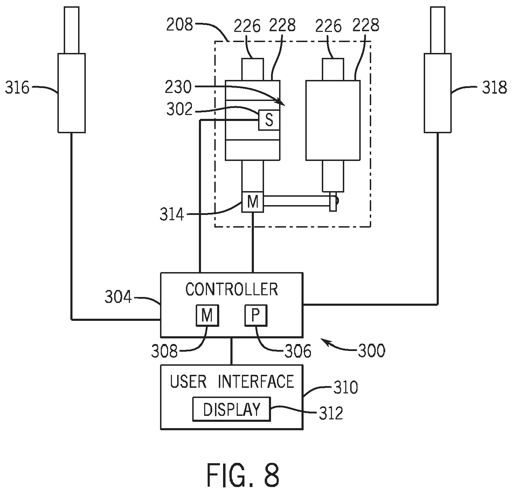

FIG. 8 is a block diagram of an embodiment of a deck plate assembly impact monitoring and control system 300 that may be employed within the agricultural harvester of FIG. 1. As previously discussed, the controller 304 of the deck plate assembly impact monitoring and control system 300 is communicatively coupled to the impact sensor(s) 302, to the feed roller drive motor 314, to the feeder house actuator 316, and to the header angle actuator 318. The feed roller drive motor 314 may include any suitable type of motor(s), such as hydraulic motor(s), pneumatic motor(s), electric motor(s), other suitable type(s) of motor(s), or a combination thereof. In the illustrated embodiment, each row unit 208 includes a single feed roller drive motor 314 configured to drive the respective pair of feed rollers 226 to rotate. However, in other embodiments, a feed roller drive motor may be configured to drive each feed roller to rotate, such that the number of feed roller drive motors is equal to the number of feed rollers. Furthermore, in certain embodiments, a single feed roller drive motor may be configured to drive multiple pairs of feed rollers to rotate (e.g., the feed rollers of all of the row units of the corn header). In addition, the feeder house actuator 316 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof. Furthermore, the header angle actuator 318 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof.

In the illustrated embodiment, one deck plate assembly 228 is a multi-deck plate deck plate assembly. The multi-deck plate deck plate assembly 228 may be any of the multi-deck plate deck plate assemblies disclosed above with reference to FIGS. 4-7, and the impact sensor(s) 302 may be suitable for use with the multi-deck plate deck plate assembly 228. For example, in certain embodiments, each deck plate of the multi-deck plate deck plate assembly 228 is rigidly coupled to the row unit frame, each deck plate of the multi-deck plate deck plate assembly 228 has a different acoustic characteristic, the impact sensor(s) include an acoustic sensor configured to output a signal indicative of an acoustic frequency response to the impact of the corn ear on each of the deck plates, and the controller 304 is configured to identify which of the deck plates (e.g., which deck plate) is impacted by the corn ear based on the acoustic frequency response. Furthermore, in certain embodiments, each deck plate of the multi-deck plate deck plate assembly 228 is rigidly coupled to the row unit frame, each impact sensor 302 is coupled to a respective deck plate of the multi-deck plate deck plate assembly 228, each impact sensor 302 is configured to output a respective signal indicative of the impact of the corn ear on the respective deck plate, and the controller 304 is configured to identify which of the deck plates (e.g., which deck plate) is impacted by the corn ear based on the signals. In addition, in certain embodiments, each deck plate of the multi-deck plate deck plate assembly 228 is pivotally coupled to the row unit frame, the row unit frame includes multiple stops, each stop is configured to block rotation of a respective deck plate of the multi-deck plate deck plate assembly 228 in response to the impact of the corn ear on the respective deck plate, each impact sensor 302 is configured to output a respective signal indicative of the impact of the corn ear on the respective deck plate, and the controller 304 is configured to identify which of the deck plates (e.g., which deck plate) is impacted by the corn ear based on the signals. Furthermore, in certain embodiments, each deck plate of the multi-deck plate deck plate assembly 228 is pivotally coupled to the row unit frame, the impact sensors 302 are coupled to the row unit frame, each impact sensor is positioned to engage a respective deck plate of the multi-deck plate deck plate assembly 228 in response to the impact of the corn ear on the respective deck plate, each impact sensor 302 is configured to output a respective signal indicative of the impact of the corn ear on the respective deck plate, and the controller 304 is configured to identify which of the deck plates (e.g., which deck plate) is impacted by the corn ear based on the signals.

In certain embodiments, in response to identifying which of the deck plates (e.g., which deck plate) is impacted by the corn ear, the controller 304 is configured to control the user interface 310 to present an indication of the deck plate impacted by the corn ear. For example, in certain embodiments, the display 312 of the user interface 310 is configured to present a visual indication of zones corresponding to the locations of the deck plates of the multi-deck plate deck plate assembly (e.g., a forward zone at the forward deck plate, a central zone at the central deck plate, a rearward zone at the rearward deck plate). In such embodiments, in response to identifying which of the deck plates (e.g., which deck plate) is impacted by the corn ear, the controller 304 may control the user interface 310 to cause the display 312 to provide a visual indication of the corn ear impact zone (e.g., by changing the color of the zone, etc.). In addition, in response to the corn ear impacting the forward zone or the rearward zone, the controller 304 may control the user interface 310 to inform the operator (e.g., via an audio or visual indication) that the corn ear impacted the forward zone or the rearward zone. In response to the user interface 310 informing the operator that the corn ear impacted the forward zone or the rearward zone, the operator may adjust operation of the agricultural harvester to cause the corn ear to impact the central zone.

As illustrated, the feed roller drive motor 314 is communicatively coupled to the controller 304. In certain embodiments, the controller 304 may control the feed roller drive motor 314 based on which of the deck plates (e.g., which deck plate) is impacted by the corn ear. For example, in response to identifying the corn ear impact on the rearward deck plate, the controller 304 may control the feed roller drive motor 314 to increase the rotation speed of the feed rollers, thereby moving the corn ear impact to the central deck plate. Furthermore, in response to identifying the corn ear impact on the forward deck plate, the controller 304 may control the feed roller drive motor 314 to reduce the rotation speed of the feed rollers, thereby moving the corn ear impact to the central deck plate. In embodiments in which the deck plate assembly impact monitoring and control system 300 includes multiple feed roller drive motors 314 (e.g., one feed roller drive motor per row unit, or one feed roller drive motor per feed roller), the controller 304 may control the feed roller drive motors 314 collectively or independently. For example, in certain embodiments (e.g., in embodiments in which the deck plate assembly impact monitoring and control system 300 includes impact sensor(s) for a single deck plate assembly 228), the controller 304 may control the feed roller drive motors 314 based on feedback from the impact sensor(s) for one deck plate assembly 228. Furthermore, in certain embodiments (e.g., in embodiments in which the deck plate assembly impact monitoring and control system 300 includes multiple impact sensors for multiple deck plate assemblies 228), the controller may control feed roller drive motor(s) 314 for each row unit based on feedback from the impact sensor(s) for the deck plate assembly 228 at the row unit (e.g., such that the feed roller drive motor(s) at each row unit are independently controlled based on the location of the corn ear impact along the deck plate assembly at the row unit).

As illustrated, the feeder house actuator 316 is communicatively coupled to the controller 304. In certain embodiments, the controller 304 may control the feeder house actuator 316 based on which of the deck plates (e.g., which deck plate) is impacted by the corn ear. For example, in response to identifying the corn ear impact on the rearward deck plate, the controller 304 may control the feeder house actuator 316 to increase the height of the corn header (e.g., the row units of the corn header) relative to the ground, thereby moving the corn ear impact to the central deck plate. Furthermore, in response to identifying the corn ear impact on the forward deck plate, the controller 304 may control the feeder house actuator 316 to reduce the height of the corn header (e.g., the row units of the corn header) relative to the ground, thereby moving the corn ear impact to the central deck plate.

As illustrated, the header angle actuator 318 is communicatively coupled to the controller 304. In certain embodiments, the controller 304 may control the header angle actuator 318 based on which of the deck plates (e.g., which deck plate) is impacted by the corn ear. For example, in response to identifying the corn ear impact on the rearward deck plate, the controller 304 may control the header angle actuator 318 to rotate the corn header (e.g., the row units of the corn header) upwardly (e.g., such that the forward end of the corn header moves upwardly), thereby moving the corn ear impact to the central deck plate. Furthermore, in response to identifying the corn ear impact on the forward deck plate, the controller 304 may control the header angle actuator 318 to rotate the corn header (e.g., the row units of the corn header) downwardly (e.g., such that the forward end of the corn header moves downwardly), thereby moving the corn ear impact to the central deck plate.

In certain embodiments, the controller 304 is configured to control one of the header angle actuator 318, the feeder house actuator 316, or the feed roller drive motor(s) 314 based on which of the deck plates (e.g., which deck plate) is impacted by the corn ear. Furthermore, in certain embodiments, the controller 304 is configured to control two or three of the header angle actuator 318, the feeder house actuator 316, and the feed roller drive motor(s) 314 based on which of the deck plates (e.g., which deck plate) is impacted by the corn ear. While the deck plate assembly impact monitoring and control system is configured to monitor three deck plates of the deck plate assembly in the embodiments disclosed above, in certain embodiments, the deck plate assembly impact monitoring and control system may be configured to monitor more or fewer deck plates of the deck plate assembly. In such embodiments, the information provided to the operator and/or the control of the actuator(s) may be based on the number of deck plates monitored by the deck plate assembly impact monitoring and control system. For example, in certain embodiments, a deck plate assembly may include a forward deck plate, a central deck plate, and a rearward deck plate, and the deck plate assembly impact monitoring and control system may include a first impact sensor configured to monitor the forward deck plate and a second impact sensor configured to monitor the rearward deck plate. However, the central deck plate may not be monitored by an impact sensor. In such embodiments, control of the user interface and the actuator(s) corresponds to the control disclosed above with regard to monitoring the forward, central, and rearward deck plates. Furthermore, in embodiments in which the deck plate assembly includes multiple forward deck plates and/or multiple rearward deck plates, control of the user interface and/or the actuator(s) is based on which deck plate the corn ear impacts. For example, the display of the user interface may present a visual indication of zones corresponding to the locations of the deck plates of the deck plate assembly, and in response to identifying which of the deck plates (e.g., which deck plate) is impacted by the corn ear, the controller may control the user interface to cause the display to provide a visual indication of the corn ear impact zone (e.g., by changing the color of the zone, etc.). Additionally or alternatively, the controller may control the feed roller drive motor(s), the feeder house actuator, the header angle actuator, or a combination thereof, based on which deck plate is impacted by the corn ear. For example, the controller may control the actuator(s) to provide a smaller change in operation in response to the corn ear impacting a deck plate closer to the central deck plate, and the controller may control the actuator(s) to provide a larger change in operation in response to the corn ear impacting a deck plate farther from the central deck plate.

## Claims

1. A row unit (208) for an agricultural harvester (100), comprising:
a frame (240, 240', 240", 240‴);
a deck plate assembly (228, 228', 228", 228‴) comprising a plurality of deck plates, wherein each of the plurality of deck plates is configured to be independently mounted to the frame (240, 240', 240", 240‴) of the row unit (208), and the plurality of deck plates are not directly rigidly coupled to one another; and
a deck plate assembly impact monitoring and control system (300, 300', 300", 300‴) comprising:
at least one impact sensor (302, 302', 302", 302‴, 320, 322, 324) configured to output at least one signal indicative of impact of a corn ear on each of the plurality of deck plates; and
a controller (304) communicatively coupled to the at least one impact sensor (302, 302', 302", 302‴), wherein the controller (304) comprises a processor (306) and a memory (308), and the controller (304) is configured to identify which of the plurality of deck plates is impacted by the corn ear based on the at least one signal.

2. A row unit (208) according to claim 1, wherein the plurality of deck plates are spaced apart from one another.

3. A row unit (208) according to claim 1 or 2, wherein at least two deck plates of the plurality of deck plates are coupled to one another by a flexible connection (252).

4. A row unit (208) according to any of the previous claims, wherein each deck plate of the plurality of deck plates has a different acoustic characteristic, the at least one impact sensor sensor (302, 302', 302", 302‴) comprises an acoustic sensor, the at least one signal is indicative of a respective acoustic frequency response to the impact of the corn ear on each of the plurality of deck plates, and the controller (304) is configured to identify which of the plurality of deck plates is impacted by the corn ear based on the respective acoustic frequency response.

5. A row unit (208) according to any of the previous claims, wherein the at least one impact sensor comprises a plurality of impact sensors (320, 322, 324), the at least one signal comprises a plurality of signals, and each impact sensor (320, 322, 324) of the plurality of impact sensors is configured to output a respective signal of the plurality of signals indicative of the impact of the corn ear on a respective deck plate of the plurality of deck plates.

6. A row unit (208) according to claim 5, wherein each impact sensor (320, 322, 324) of the plurality of impact sensors is coupled to a respective deck plate of the plurality of deck plates.

7. A row unit (208) according to claim 5, wherein the plurality of impact sensors is configured to couple to the frame of the row unit, and each impact sensor (320, 322, 324) of the plurality of impact sensors is positioned to engage a respective deck plate of the plurality of deck plates in response to the impact of the corn ear on the respective deck plate.

8. A row unit (208) according to any one of the previous claims, wherein the controller is further configured to control at least one actuator of the agricultural harvester based on which of the plurality of deck plates is impacted by the corn ear.

9. A row unit (208) of claim 8, wherein the at least one actuator comprises:
a feed roller drive motor (314) configured to drive a feed roller of the row unit (208) to rotate;
a feeder house actuator (316) configured to drive the row unit (208) to move vertically;
a header angle actuator (318) configured to drive the row unit (208) to rotate about a lateral axis; or
a combination thereof.

10. A row unit (208) according to claim 4 or 5, wherein each deck plate of the plurality of deck plates is rigidly coupled to the frame (240‴).

11. A row unit according to claim 1 or 2, wherein each deck plate of the plurality of deck plates is pivotally coupled to the frame (240"), the at least one impact sensor (302") comprises a plurality of impact sensors, the at least one signal comprises a plurality of signals, the frame ( 240") comprises a plurality of stops (264), each stop of the plurality of stops is configured to block rotation of a respective deck plate of the plurality of deck plates in response to the impact of the corn ear on the respective deck plate, and each impact sensor (302") of the plurality of impact sensors is configured to output a respective signal of the plurality of signals indicative of the impact of the corn ear on the respective deck plate.

12. A row unit (208) of claim 1 or 2, wherein each deck plate of the plurality of deck plates is pivotally coupled to the frame (240'), the at least one impact sensor (302') comprises a plurality of impact sensors, the at least one signal comprises a plurality of signals, the plurality of impact sensors are coupled to the frame (240'), each impact sensor of the plurality of impact sensors is positioned to engage a respective deck plate of the plurality of deck plates in response to the impact of the corn ear on the respective deck plate, and each impact sensor of the plurality of impact sensors is configured to output a respective signal of the plurality of signals indicative of the impact of the corn ear on the respective deck plate.

13. A corn header (200) comprising a row unit (208) according to any one of the previous claims.

14. A combine harvester (100) comprising a corn header (200) according to claim 13.
